# EUROPÄISCHE PATENTSCHRIFT

(11) **EP 4 293 323 B1**
(45) Veröffentlichungstag und Bekanntmachung des Hinweises auf die Patenterteilung: **21.08.2024**
(21) Anmeldenummer: 23165517.6
(22) Anmeldetag: 30.03.2023
(51) Int. Cl.: G01D 5/244, G01D 5/347

(54) **VORRICHTUNG UND VERFAHREN ZUR ÜBERWACHUNG EINER FUNKTIONALITÄT EINES GERÄTS ZUR POSITIONS-, LÄNGEN- ODER WINKELBESTIMMUNG**
DEVICE AND METHOD FOR MONITORING THE FUNCTIONALITY OF A DEVICE FOR DETERMINING POSITION, LENGTH OR ANGLE
DISPOSITIF ET PROCÉDÉ DE SURVEILLANCE D'UNE FONCTIONNALITÉ D'UN APPAREIL DE DÉTERMINATION DE POSITION, DE LONGUEUR OU D'ANGLE

(30) Priorität: 15.06.2022 DE 102022115039
(43) Veröffentlichungstag der Anmeldung: 20.12.2023
(73) Patentinhaber: SICK AG, 79183 Waldkirch (DE)
(72) Erfinder: Sellmer, Christian, 78166 Donaueschingen (DE)
(74) Vertreter: Manitz Finsterwald Patent- und Rechtsanwaltspartnerschaft mbB

(56) Entgegenhaltungen:
- EP-A1- 1 744 128
- EP-A1- 2 937 671
- US-A1- 2013 265 639

## Beschreibung

Die Erfindung betrifft eine Vorrichtung und ein Verfahren zur Überwachung einer Funktionalität eines Geräts zur Positions-, Längen- oder Winkelbestimmung.

Geräte zur Positions-, Längen- oder Winkelbestimmung, die auch als Encoder oder Kodierer bezeichnet werden, sind Vorrichtungen, die Signale aus mechanischen Bewegungen erfassen und ausgeben können.

Dabei gibt es sowohl Geräte, die rotatorisch ausgebildet sind, also eine Drehbewegung erfassen, als auch Geräte, die linear ausgebildet sind, also eine Längsbewegung erfassen. Diese Geräte können beispielsweise optisch, magnetisch, kapazitiv oder induktiv arbeiten und so eine Position, eine Länge oder einen Winkel erfassen.

Dabei kann beispielsweise durch äußere Einflüsse eine Verfälschung der Erfassung auftreten, wodurch eine Erfassung einer Position, einer Länge oder eines Winkels verfälscht wird. Um diese Verfälschung zu erkennen wird eine Vorrichtung zur Überwachung einer Funktionalität eines Geräts zur Positions-, Längen- oder Winkelbestimmung verwendet.

Aus der Druckschrift EP 2 647 967 B1 ist beispielsweise ein System und Verfahren zur Überwachung von Ausgangssignalen eines Kodierers bekannt.

Dokument US 2013/265639 A1 beschreibt ein System mit einem kalibrierten, rotierenden Encoder, welches für die genaue Nachführung eines Teleskops entlang der Rektaszensionsdrehachse verwendet wird.

Dokument EP 2 937 671 A1 zeigt einen Absolut-Encoder, welcher die Genauigkeit seines Ausgabewerts trotz defekter Skala verbessert.

Dokument EP 1 744 128 A1 beschreibt ein Verfahren zum Bestimmen der absoluten Winkelstellung des Lenkrades eines Kraftfahrzeugs.

Es ist eine Aufgabe der vorliegenden Erfindung, eine verbesserte Vorrichtung und ein verbessertes Verfahren zur Überwachung einer Funktionalität eines Geräts zur Positions-, Längen- oder Winkelbestimmung anzugeben.

Diese Aufgabe wird gelöst durch eine Vorrichtung zur Überwachung einer Funktionalität eines Geräts zur Positions-, Längen- oder Winkelbestimmung gemäß dem unabhängigen Anspruch 1.

Die in Anspruch 1 definierte erfindungsgemäße Vorrichtung umfasst dabei zunächst einen Sendebereich mit zumindest einem Sendeelement. Das Sendeelement ist dabei ausgebildet ein Signal auszusenden. Dabei kann das Sendeelement optisch, magnetisch, kapazitiv oder induktiv ausgebildet sein und ein entsprechendes Signal aussenden. Im Falle eines optischen Sendelements kann es sich beispielsweise um eine Halbleiterlichtquelle, insbesondere eine LED handeln. Der Sendebereich kann insbesondere mehr als ein Sendeelement aufweisen, beispielsweise zwei, vier, acht oder mehr Sendeelemente.

Die Vorrichtung umfasst weiter einen Empfangsbereich mit zumindest einem Empfangselement. Das Empfangselement ist dabei ausgebildet, das von dem Sendeelement ausgesendete Signal zu empfangen. Das Empfangselement kann auch optisch, magnetisch, kapazitiv oder induktiv ausgebildet sein und ein entsprechendes Signal empfangen. Insbesondere ist das Empfangselement korrespondierend zu dem Sendeelement ausgebildet. Im Falle eines optischen Empfangselements kann es sich beispielsweise um einen Halbleiterlichtempfänger, insbesondere eine Photodiode handeln. Der Empfangsbereich kann auch mehrere Empfangselemente aufweisen, insbesondere gleich viele wie Sendeelemente vorhanden sind.

Die Vorrichtung umfasst auch einen Codierungsbereich, der ein Codewort bildet. Das Codewort besteht dabei aus einer vordefinierten endlichen Länge aus mehreren aufeinanderfolgenden Elementen, die eine logische Eins oder eine logische Null repräsentieren. Der Codierungsbereich kann auch optisch, magnetisch, kapazitiv oder induktiv ausgebildet sein. Insbesondere ist der Codierungsbereich korrespondierend zu dem Sendeelement und dem Empfangselement ausgebildet. Im Falle eines optischen Codierungselements ist ein Element, das eine logische Eins repräsentiert, ein Abschnitt, der lichtdurchlässig ist, und ein Element, das eine logische Null repräsentiert, ein Abschnitt der lichtundurchlässig ist, oder andersherum, das heißt ein Element, das eine logische Null repräsentiert ist ein Abschnitt der lichtdurchlässig ist und ein Element, das eine logische Eins repräsentiert ist ein Abschnitt der lichtundurchlässig ist.

Beispielsweise umfasst das Codewort zumindest eine Eins und eine Null. Insbesondere umfasst das Codewort mehr als zwei Elemente, insbesondere vier, acht, neun, zehn, zwölf oder 16 Elemente, die aus aufeinanderfolgenden Einsen und Nullen bestehen.

Insbesondere handelt es sich bei dem Codewort um eine Absolutcodewort.

Dabei sind der Sendebereich, der Empfangsbereich und der Codierungsbereich derart beweglich zueinander angeordnet und ausgebildet, dass das Empfangselement in Abhängigkeit von der Position des Codierungsbereichs zu dem Empfangsbereich eine logische Eins oder eine logische Null empfängt.

Die Vorrichtung umfasst auch eine Auswertungseinheit, die ausgebildet ist, sämtliche Übergänge von einer logischen Eins zu einer logischen Null und sämtliche Übergänge von einer logischen Null zu einer logischen Eins des Codeworts zu erfassen und mit einem Referenzwert des Codeworts zu vergleichen.

Die Auswertungseinheit umfasst dazu eine anwendungsspezifische integrierte Schaltung (ASIC), eine feldprogrammierbare Gatteranordnung (FPGA) und/oder einen Mikrokontroller.

Durch die erfindungsgemäße Lösung ist es somit möglich, die Funktion des Geräts zur Positions-, Längen- oder Winkelbestimmung dauerhaft bzw. kontinuierlich im Betrieb zu überwachen. Insbesondere wird durch die erfindungsgemäße Lösung im Gegensatz zum Stand der Technik das Gesamte Codewort verglichen, wodurch es möglich ist, sowohl globale als auch lokale Verfälschungen der Erfassung der Position, der Länge oder des Winkel zu ermitteln.

Dabei ist die Auswertungseinheit ausgebildet, einen Zeitpunkt der Übergänge von einer logischen Eins zu einer logischen Null und der Übergänge von einer logischen Null zu einer logischen Eins zu erfassen und mit einem Referenzwert der Zeitpunkte zu vergleichen.

Insbesondere ist die Auswertungseinheit ausgebildet, den zeitlichen und/oder räumlichen Abstand zwischen dem Übergang von einer logischen Null zu einer logischen Eins und andersherum zu erfassen. Dieser Abstand zwischen Flanken des Signals kann auch als Duty Cycle oder Tastgrad bezeichnet werden und entspricht der Position der Schaltschwelle für jedes einzelne Empfangselement.

Dadurch wird ein besonders genauer Vergleich ermöglicht.

Die Auswertungseinheit ist auch ausgebildet, eine zeitliche Abweichung, insbesondere eine Standardabweichung und/oder einen Erwartungswert der Übergänge von einer logischen Eins zu einer logischen Null und der Übergänge von einer logischen Null zu einer logischen Eins zu einem jeweiligen Referenzwert zu erfassen.

Hierdurch können besonders gut globale Verfälschungen erkannt werden.

Die Vorrichtung kann dadurch weitergebildet werden, dass die Auswertungseinheit auch ausgebildet ist, basierend auf dem Vergleich einen Korrekturwert zu ermitteln.

Dieser Korrekturwert kann insbesondere ein Korrekturwert sein, der dem Gerät zur Positions-, Längen- oder Winkelbestimmung bereitgestellt wird, um diesen bei der Erfassung zu verwenden und so eine Verfälschung zu korrigieren.

Dies kann insbesondere dadurch erfolgen, dass das Sendeelement auf Basis des Korrekturwerts angepasst wird. Alternativ oder zusätzlich kann auch das Empfangselement angepasst werden. Beispielsweise kann das Sendeelement und/oder das Empfangselement nachgeregelt werden.

Die Vorrichtung kann dadurch weitergebildet werden, dass die Auswertungseinheit weiter ausgebildet ist, basierend auf dem Vergleich einen Fehler auszugeben.

Der Fehler kann dabei sowohl an der erfindungsgemäßen Vorrichtung als auch an dem Gerät zur Positions-, Längen- oder Winkelbestimmung ausgegeben werden.

Insbesondere kann die Auswertungseinheit ausgebildet sein, einen Grad des Fehlers zu erfassen und auszugeben, beispielweise einen Grad der Verfälschung.

Darüber hinaus kann die Auswertungseinheit auch ausgebildet sein, eine Verschlechterung der Verfälschung zu erfassen und insbesondere diese Verschlechterung auszugeben.

Ebenso kann die Auswertungseinheit auch ausgebildet sein, einen ermittelten Erwartungswert und/oder eine ermittelte Standardabweichung auszugeben.

Insbesondere kann die Auswertungseinheit ausgebildet sein, eine Wartungs- und/oder Austauschempfehlung einer Komponente des Geräts zur Positions-, Längen- oder Winkelbestimmung auszugeben, weiter insbesondere basierend auf dem Grad der Verfälschung und/oder der Verschlechterung.

Die Eingangs genannte Aufgabe wird auch gelöst durch ein Verfahren zur Überwachung einer Funktionalität eines Geräts zur Positions-, Längen- oder Winkelbestimmung. Das Verfahren umfasst dabei ein Bereitstellen einer Vorrichtung zur Überwachung einer Funktionalität eines Geräts zur Positions-, Längen- oder Winkelbestimmung, insbesondere eine Vorrichtung gemäß einer der zuvor beschriebenen Ausführungsformen, ein Erfassen sämtlicher Übergänge von einer logischen Eins zu einer logischen Null und sämtliche Übergänge von einer logischen Null zu einer logischen Eins eines Codeworts; und ein Vergleichen der erfassten Übergänge mit einem Referenzwert des Codeworts.

Das Verfahren kann dadurch weitergebildet werden, dass es zusätzlich ein Ermitteln eines Korrekturwerts basierend auf dem Vergleich umfasst.

Das Verfahren kann dadurch weitergebildet werden, dass es zusätzlich ein Anpassen des Sendeelements und/oder des Empfangselements auf Basis des Korrekturwerts umfasst.

Das Verfahren kann dadurch weitergebildet werden, dass es zusätzlich ein Ausgeben eines Fehlers basierend auf dem Vergleich umfasst.

Bezüglich der Vorteile und Ausführungsformen des Verfahrens wird auf die oben beschriebenen Vorteile und Ausführungsformen der Vorrichtung verwiesen.

Ausführungsformen einer Vorrichtung und eines Verfahrens zur Überwachung einer Funktionalität eines Geräts zur Positions-, Längen- oder Winkelbestimmung werden nun im Zusammenhang mit den folgenden Figuren näher beschrieben. Es zeigen:
- Fig. 1: eine schematische Ansicht einer Vorrichtung zur Überwachung einer Funktionalität eines Geräts zur Positions-, Längen- oder Winkelbestimmung;
- Fig. 2: ein Ablaufdiagramm eines Verfahrens zur Überwachung einer Funktionalität eines Geräts zur Positions-, Längen- oder Winkelbestimmung;
- Fig. 3: eine beispielhafte Auswertung die durch eine Vorrichtung zur Überwachung einer Funktionalität eines Geräts zur Positions-, Längen- oder Winkelbestimmung, wie in Fig. 1 gezeigt, und/oder ein Verfahren zur Überwachung einer Funktionalität eines Geräts zur Positions-, Längen- oder Winkelbestimmung, wie in Fig. 2 gezeigt, erfolgt; und
- Fig. 4: eine weitere beispielhafte Auswertung die durch eine Vorrichtung zur Überwachung einer Funktionalität eines Geräts zur Positions-, Längen- oder Winkelbestimmung, wie in Fig. 1 gezeigt, und/oder ein Verfahren zur Überwachung einer Funktionalität eines Geräts zur Positions-, Längen- oder Winkelbestimmung, wie in Fig. 2 gezeigt, erfolgt.

Dabei bezeichnen gleiche Bezugszeichen gleiche oder ähnliche Merkmale.

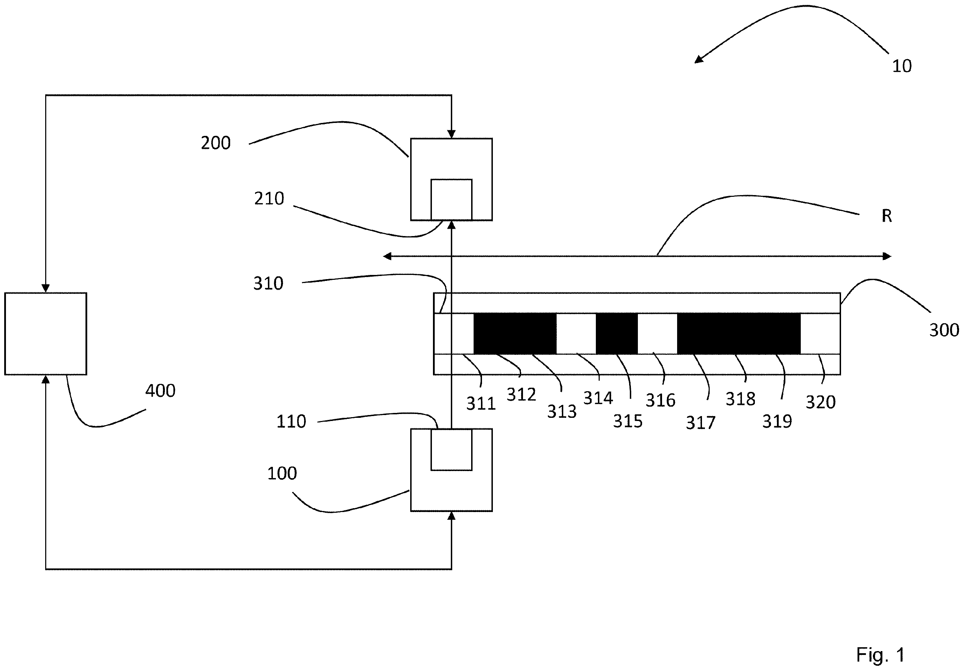

Fig. 1 zeigt eine schematische Ansicht einer Vorrichtung 10 zur Überwachung einer Funktionalität eines Geräts zur Positions-, Längen- oder Winkelbestimmung.

Die Vorrichtung 10 umfasst dabei einen Sendebereich 100 mit einem Sendeelement 110 und einen Empfangsbereich 200 mit einem Empfangselement 210.

Die Vorrichtung 10 umfasst auch einen Codierungsbereich 300, der ein Codewort 310 mit einer vordefinierten, endlichen Länge aus mehreren aufeinanderfolgenden Elementen 311, 312, 313, 314, 315, 316, 317, 318, 319 und 320 bildet, die eine logische Eins oder eine logische Null repräsentieren, bildet. Dabei ist beispielhaft ein Codewort 310 mit zehn Elementen ausgebildet, wobei das Element 311 eine Eins, das Element 312 eine Null, das Element 313 eine Null, das Element 314 eine Eins, das Element 315 eine Null, das Element 316 eine Eins, das Element 317 eine Null, das Element 318 eine Null, das Element 319 eine Null sowie das Element 320 eine Eins repräsentieren. Das Codewort 310 entspricht somit der Zahlenfolge 1 0 0 1 0 1 0 0 0 1.

Dabei ist beispielhaft das Sendeelement 110 als LED, das Empfangselement 210 als Photodiode und das Codewort aus lichtdurchlässigen und lichtundurchlässigen Bereichen abgebildet. Die Elemente 312, 313, 315, 317, 318 und 319, die eine Null repräsentieren sind somit lichtundurchlässig und die Elemente 311, 314, 316 und 320, die eine Eins repräsentieren lichtdurchlässig ausgebildet.

Dabei ist der Sendebereich 100, der Empfangsbereich 200 und der Codierungsbereich 300 derart beweglich entlang einer Richtung R zueinander angeordnet und ausgebildet, dass das Empfangselement 210 in Abhängigkeit von der Position des Codierungsbereichs 300 zu dem Empfangsbereich 200 eine logische Eins oder eine logische Null empfängt.

Die Vorrichtung 10 umfasst auch eine Auswertungseinheit 400, die ausgebildet ist, sämtliche Übergänge von einer logischen Eins zu einer logischen Null und sämtliche Übergänge von einer logischen Null zu einer logischen Eins des Codeworts 310 zu erfassen und mit einem Referenzwert des Codeworts zu vergleichen.

Insbesondere ist die Auswertungseinheit 400 ausgebildet einen Zeitpunkt der Übergänge von einer logischen Eins zu einer logischen Null und der Übergänge von einer logischen Null zu einer logischen Eins zu erfassen und mit einem Referenzwert der Zeitpunkte zu vergleichen.

Die Auswertungseinheit 400 ist auch ausgebildet, eine Abweichung, insbesondere eine Standardabweichung und/oder einen Erwartungswert der Übergänge von einer logischen Eins zu einer logischen Null und der Übergänge von einer logischen Null zu einer logischen Eins zu einem jeweiligen Referenzwert zu erfassen.

Die Auswertungseinheit 400 ist weiter ausgebildet, basierend auf dem Vergleich bzw. auf der erfassten Abweichung einen Korrekturwert zu ermitteln und eine Funktion des Sendeelements 110 und/oder des Empfangselements 210 basierend auf diesem Korrekturwert anzupassen.

Ebenso ist die Auswertungseinheit 400 weiter ausgebildet, basierend auf dem Vergleich bzw. der erfassten Abweichung einen Fehler auszugeben.

Die Funktionen der Vorrichtung 10 werden nun anhand des in Fig. 1 gezeigten Codeworts 310 beispielhaft erläutert. Wie zuvor ausgeführt ist das Codewort, das auch als Absolutwort bezeichnet werden kann, 1 0 0 1 0 1 0 0 0 1. Es wird nun basierend auf dem Abstand der Flanken, der auch als Duty Cycle oder Tastgrad bezeichnet werden kann, zwischen den Elementen Eins und Null durch die Auswertungsvorrichtung erfasst. Dieser beträgt für das gezeigte Beispiel zwei Elemente für den Abstand 1 0 0 1, ein Element für den Abstand 0 1 0, ein Element für den Abstand 1 0 1, ein Element für den Abstand 0 1 0 und drei Elemente für den Abstand 1 0 0 0 1.

Damit die Abstände vergleichbar sind, müssen diese zunächst normiert werden. Hierzu wird für alle Perioden zwischen den Flanken der Mittelwert gebildet, wodurch der normierte Abstand gleich ist für diese Bereiche. Dabei beträgt der normierte Duty Cycle der Hälfte des normierten Abstands.

In dem vorliegenden gezeigten Beispiel wird angenommen, dass sich die Transparenz des Codebereichs bzw. der Elemente des Codeworts global verändert hat. Für das zuvor genannte Beispiel empfängt das Empfangselement 210 zunächst den folgenden Abstand: 2,2, 0,9, 1,1, 0,9 und 3,3. Der sich hieraus ergebende normierte Abstand für das Codewort 310 zwischen den insgesamt zehn Elementen beträgt somit 1,1, 1,1, 0,9, 1,1, 0,9, 1,1, 1,1, und 1,1. Somit beträgt der normierte Duty Cycle 0,45 oder 0,55, je nachdem ob der Duty Cycle auf die Null oder die Eins bezogen wird.

Dieses Absolutwort kann dann über die gesamte Auflösung von beispielsweise 1024 bit ermittelt werden und in einer Tabelle erfasst werden.

Diese Tabelle kann dann über mehrere Zeitpunkte t1 bis t2 erfasst werden und statistisch ausgewertet werden. Hieraus kann dann beispielsweise eine kontinuierliche Verschlechterung abgeleitet werden, beispielsweise weil der Duty Cycle mit der Zeit zunimmt.

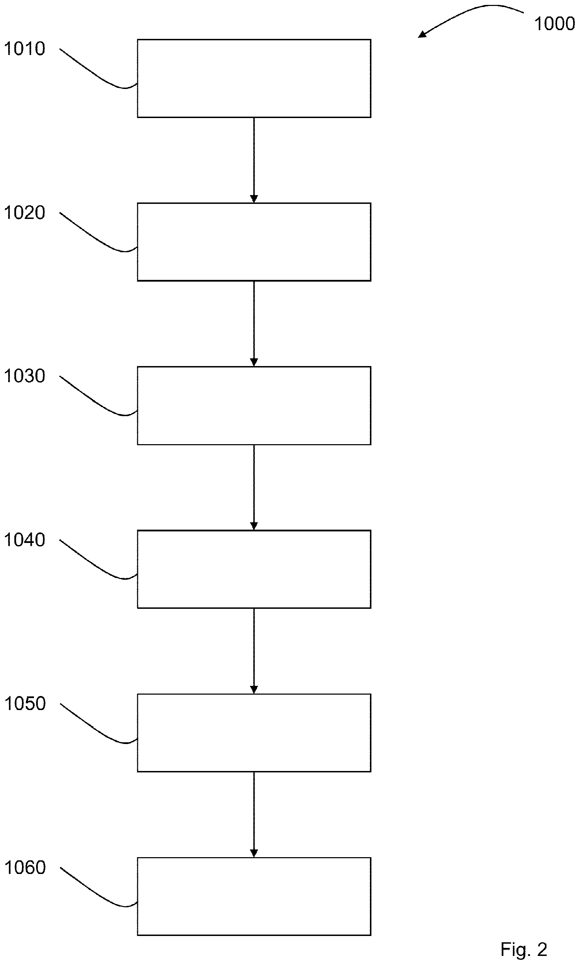

Basierend hierauf können dann Warnungen und/oder Handlungsanweisungen ausgegeben werden
Fig. 2 zeigt ein Ablaufdiagramm eines Verfahrens 1000 zur Überwachung einer Funktionalität eines Geräts zur Positions-, Längen- oder Winkelbestimmung.

Das Verfahren 1000 beginnt in einem ersten Schritt 1010, in dem eine Vorrichtung zur Überwachung einer Funktionalität eines Geräts zur Positions-, Längen- oder Winkelbestimmung, insbesondere eine Vorrichtung wie in Fig. 1 gezeigt, bereitgestellt wird.

In einem darauffolgenden Schritt 1020 werden sämtliche Übergänge von einer logischen Eins zu einer logischen Null und sämtliche Übergänge von einer logischen Null zu einer logischen Eins eines Codeworts erfasst.

In einem darauffolgenden Schritt 1030 werden die erfassten Übergänge mit einem Referenzwert des Codeworts verglichen.

In einem weiteren Schritt 1040 wird ein Korrekturwert basierend auf dem Vergleich ermittelt.

In einem weiteren Schritt 1050 wird das Sendeelement und/oder das Empfangselement auf Basis des Korrekturwerts angepasst.

In einem weiteren Schritt 1060 wird ein Fehler basierend auf dem Vergleich ausgegeben.

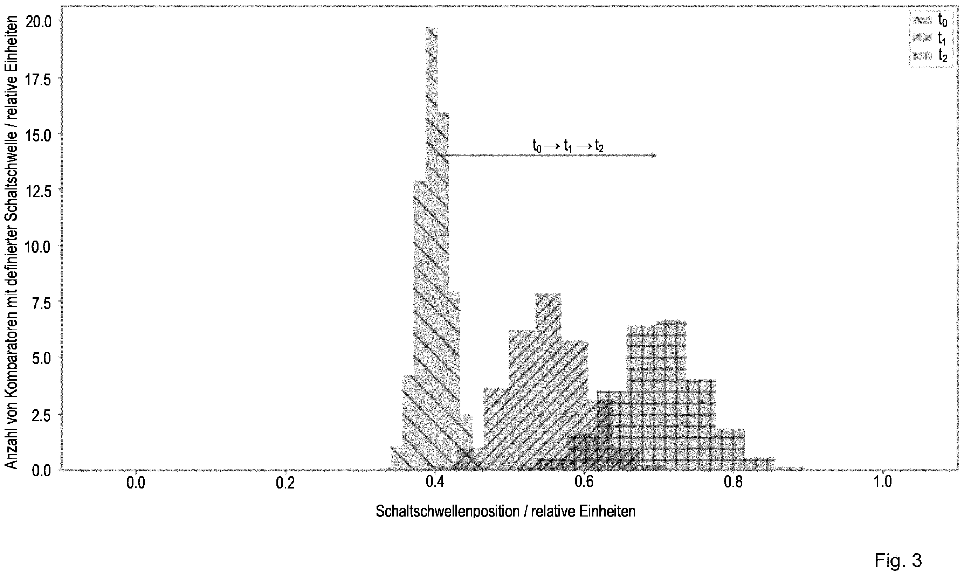

Fig. 3 zeigt eine beispielhafte Auswertung die durch eine Vorrichtung zur Überwachung einer Funktionalität eines Geräts zur Positions-, Längen- oder Winkelbestimmung, wie in Fig. 1 gezeigt, und/oder ein Verfahren zur Überwachung einer Funktionalität eines Geräts zur Positions-, Längen- oder Winkelbestimmung, wie in Fig. 2 gezeigt, erfolgt.

Dabei ist zu erkennen, dass sich im Laufe der Zeit die Transparenz des Codebereichs verändert, insbesondere verschlechtert. Dadurch ändert sich sowohl der Erwartungswert als auch die Standardabweichung des Vergleichs.

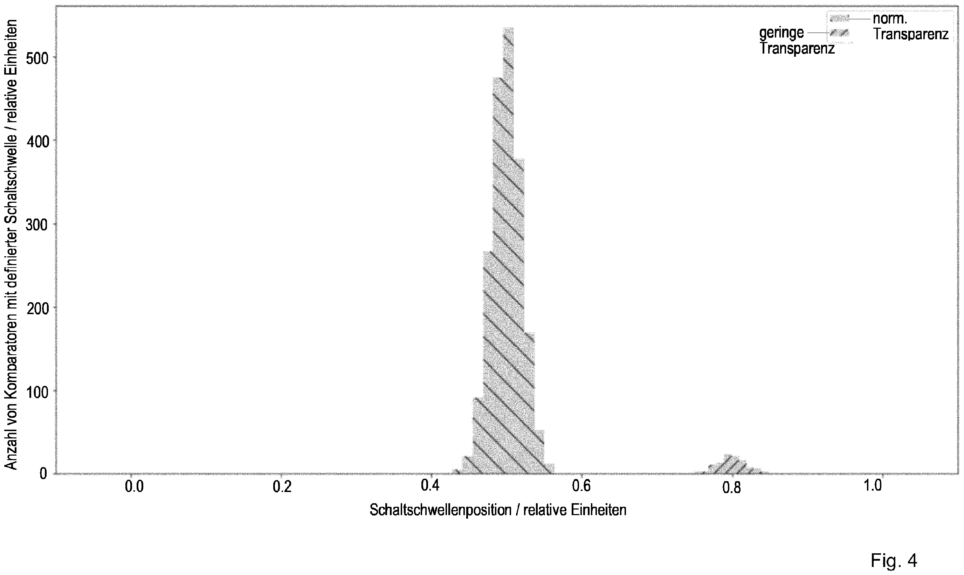

Fig. 4 zeigt eine weitere beispielhafte Auswertung die durch eine Vorrichtung zur Überwachung einer Funktionalität eines Geräts zur Positions-, Längen- oder Winkelbestimmung, wie in Fig. 1 gezeigt, und/oder ein Verfahren zur Überwachung einer Funktionalität eines Geräts zur Positions-, Längen- oder Winkelbestimmung, wie in Fig. 2 gezeigt, erfolgt.

Dabei ist zu erkennen, dass die Überwiegende Mehrheit der Codeelemente eine ordnungsgemäße Funktion hat. Bei diesen liegt die Schaltschwelle bei 0,5. Einige wenige Codeelemente sind jedoch beispielsweise durch Verschmutzung beeinträchtigt sind. Bei diesen liegt die Schaltschwelle bei 0,8. Durch geschickte Auswertung, insbesondere durch Clustering, können diese wenigen Codeelemente erfasst und bei der globalen Berechnung ignoriert werden.

### Bezugszeichenliste

- 10: Vorrichtung
- 100: Sendebereich
- 110: Sendeelement
- 200: Empfangsbereich
- 210: Empfangselement
- 300: Codebereich
- 310: Codewort
- 311: Codeelement
- 312: Codeelement
- 313: Codeelement
- 314: Codeelement
- 315: Codeelement
- 316: Codeelement
- 317: Codeelement
- 318: Codeelement
- 319: Codeelement
- 320: Codeelement
- 400: Auswertungseinheit
- 1000: Verfahren
- 1010: Verfahrensschritt
- 1020: Verfahrensschritt
- 1030: Verfahrensschritt
- 1040: Verfahrensschritt
- 1050: Verfahrensschritt
- 1060: Verfahrensschritt
- R: Richtung

## Patentansprüche

1. Vorrichtung (10) zur Überwachung einer Funktionalität eines Geräts zur Positions-, Längen- oder Winkelbestimmung, wobei die Vorrichtung (10) umfasst:
- einen Sendebereich (100), umfassend zumindest ein Sendeelement (110);
- einen Empfangsbereich (200), umfassend zumindest ein Empfangselement (210);
- einen Codierungsbereich (300), der ein Codewort (310) mit einer vordefinierten, endlichen Länge aus mehreren aufeinanderfolgenden Elementen (311-320), die eine logische Eins oder eine logische Null repräsentieren, bildet;
- wobei der Sendebereich (100), der Empfangsbereich (200) und der Codierungsbereich (300) derart beweglich zueinander angeordnet und ausgebildet sind, dass das Empfangselement (210) in Abhängigkeit von der Position des Codierungsbereichs (300) zu dem Empfangsbereich (200) eine logische Eins oder eine logische Null empfängt; und
- eine Auswertungseinheit (400), die ausgebildet ist, sämtliche Übergänge von einer logischen Eins zu einer logischen Null und sämtliche Übergänge von einer logischen Null zu einer logischen Eins des Codeworts (310) zu erfassen und mit einem Referenzwert des Codeworts zu vergleichen **dadurch gekennzeichnet, dass** die Auswertungseinheit (400) ausgebildet ist, einen Zeitpunkt der Übergänge von einer logischen Eins zu einer logischen Null und der Übergänge von einer logischen Null zu einer logischen Eins zu erfassen und mit einem Referenzwert der Zeitpunkte zu vergleichen, und die Auswertungseinheit (400) weiter ausgebildet ist, eine zeitliche Abweichung der Übergänge von einer logischen Eins zu einer logischen Null und der Übergänge von einer logischen Null zu einer logischen Eins zu einem jeweiligen Referenzwert zu erfassen.

2. Vorrichtung (10) nach Anspruch 1,
wobei die Auswertungseinheit (400) weiter ausgebildet ist, eine Standardabweichung über die Übergänge von einer logischen Eins zu einer logischen Null und der Übergänge von einer logischen Null zu einer logischen Eins zu einem jeweiligen Referenzwert zu erfassen.

3. Vorrichtung (10) nach einem der vorstehenden Ansprüche,
wobei die Auswertungseinheit (400) weiter ausgebildet ist, basierend auf dem Vergleich einen Korrekturwert zu ermitteln.

4. Vorrichtung (10) nach Anspruch 3,
wobei die Auswertungseinheit (400) weiter ausgebildet ist, das Sendeelement (110) und/oder das Empfangselement (210) auf Basis des Korrekturwerts anzupassen.

5. Vorrichtung (10) nach einem der vorstehenden Ansprüche,
wobei die Auswertungseinheit (400) weiter ausgebildet ist, basierend auf dem Vergleich einen Fehler auszugeben.

6. Verfahren (1000) zur Überwachung einer Funktionalität eines Geräts zur Positions-, Längen- oder Winkelbestimmung, umfassend:
- Bereitstellen (1010) einer Vorrichtung gemäß einem der Ansprüche 1 bis 5 zur Überwachung einer Funktionalität eines Geräts zur Positions-, Längen- oder Winkelbestimmung;
- Erfassen (1020) sämtlicher Übergänge von einer logischen Eins zu einer logischen Null und sämtliche Übergänge von einer logischen Null zu einer logischen Eins eines Codeworts; und
- Vergleichen (1030) der erfassten Übergänge mit einem Referenzwert des Codeworts.

7. Verfahren (1000) nach Anspruch 6, weiter umfassend:
- Ermitteln (1040) eines Korrekturwerts basierend auf dem Vergleich.

8. Verfahren (1000) nach Anspruch 7, weiter umfassend:
- Anpassen (1050) eines Sendeelements (110) und/oder eines Empfangselements (210) der Vorrichtung (10) auf Basis des Korrekturwerts.

9. Verfahren (1000) nach einem der Ansprüche 6 bis 8, weiter umfassend:
- Ausgeben (1060) eines Fehlers basierend auf dem Vergleich.

## Claims

1. An apparatus (10) for monitoring a functionality of a device for position, length or angle determination, wherein the apparatus (10) comprises:
- a transmission region (100) comprising at least one transmission element (110);
- a reception region (200) comprising at least one reception element (210);
- a coding region (300) which forms a code word (310) of a predefined finite length comprising a plurality of consecutive elements (311-320) that represent a logical one or a logical zero;
- wherein the transmission region (100), the reception region (200) and the coding region (300) are arranged and formed movable relative to one another such that the reception element (210) receives a logical one or a logical zero depending on the position of the coding region (300) relative to the reception region (200); and
- an evaluation unit (400) which is configured to detect all the transitions from a logical one to a logical zero and all the transitions from a logical zero to a logical one of the code word (310) and to compare them with a reference value of the code word,
**characterized in that**
the evaluation unit (400) is configured to detect a point in time of the transitions from a logical one to a logical zero and of the transitions from a logical zero to a logical one and to compare said points in time with a reference value of the points in time, and
the evaluation unit (400) is further configured to detect a temporal deviation of the transitions from a logical one to a logical zero and of the transitions from a logical zero to a logical one relative to a respective reference value.

2. An apparatus (10) according to claim 1,
wherein the evaluation unit (400) is further configured to detect a standard deviation across the transitions from a logical one to a logical zero and of the transitions from a logical zero to a logical one relative to a respective reference value.

3. An apparatus (10) according to one of the preceding claims,
wherein the evaluation unit (400) is further configured to determine a correction value based on the comparison.

4. An apparatus (10) according to claim 3,
wherein the evaluation unit (400) is further configured to adjust the transmission element (110) and/or the reception element (210) on the basis of the correction value.

5. An apparatus (10) according to any one of the preceding claims,
wherein the evaluation unit (400) is further configured to output an error based on the comparison.

6. A method (1000) for monitoring a functionality of a device for position, length or angle determination, comprising:
- providing (1010) an apparatus according to any one of the claims 1 to 5 for monitoring a functionality of a device for position, length or angle determination;
- detecting (1020) all the transitions from a logical one to a logical zero and all the transitions from a logical zero to a logical one of a code word; and
- comparing (1030) the detected transitions with a reference value of the code word.

7. A method (1000) according to claim 6, further comprising:
- determining (1040) a correction value based on the comparison.

8. A method (1000) according to claim 7, further comprising:
- adjusting (1050) a transmission element (110) and/or a reception element (210) of the apparatus (10) on the basis of the correction value.

9. A method (1000) according to any one of the claims 6 to 8, further comprising:
- outputting (1060) an error based on the comparison.

## Revendications

1. Dispositif (10) de surveillance d'une fonctionnalité d'un appareil de détermination d'une position, d'une longueur ou d'un angle, le dispositif (10) comprenant :
- une zone d'émission (100) comprenant au moins un élément d'émission (110) ;
- une zone de réception (200) comprenant au moins un élément de réception (210) ;
- une zone de codage (300) formant un mot de code (310) d'une longueur finie prédéfinie à partir d'une pluralité d'éléments successifs (311-320) représentant un un logique ou un zéro logique ;
- la zone d'émission (100), la zone de réception (200) et la zone de codage (300) étant disposées de manière mobile les unes par rapport aux autres et étant formées de telle sorte que l'élément de réception (210) reçoit un un logique ou un zéro logique en fonction de la position de la zone de codage (300) par rapport à la zone de réception (200) ; et
- une unité d'évaluation (400) conçue pour détecter toutes les transitions d'un un logique à un zéro logique et toutes les transitions d'un zéro logique à un un logique du mot de code (310) et pour les comparer à une valeur de référence du mot de code,
**caractérisé en ce que**
l'unité d'évaluation (400) est conçue pour détecter un instant des transitions d'un un logique à un zéro logique et des transitions d'un zéro logique à un un logique et pour le comparer à une valeur de référence des instants, et l'unité d'évaluation (400) est en outre conçue pour détecter un écart temporel par rapport à une valeur de référence respective des transitions d'un un logique à un zéro logique et des transitions d'un zéro logique à un un logique.

2. Dispositif (10) selon la revendication 1,
dans lequel l'unité d'évaluation (400) est en outre conçue pour détecter un écart-type par rapport à une valeur de référence respective des transitions d'un un logique à un zéro logique et des transitions d'un zéro logique à un un logique.

3. Dispositif (10) selon l'une des revendications précédentes,
dans lequel l'unité d'évaluation (400) est en outre conçue pour déterminer une valeur de correction en se basant sur la comparaison.

4. Dispositif (10) selon la revendication 3,
dans lequel l'unité d'évaluation (400) est en outre conçue pour adapter l'élément d'émission (110) et/ou l'élément de réception (210) en se basant sur la valeur de correction.

5. Dispositif (10) selon l'une des revendications précédentes,
dans lequel l'unité d'évaluation (400) est en outre conçue pour émettre une erreur en se basant sur la comparaison.

6. Procédé (1000) de surveillance d'une fonctionnalité d'un appareil de détermination d'une position, d'une longueur ou d'un angle, consistant à :
- fournir (1010) un dispositif de surveillance d'une fonctionnalité d'un appareil de détermination d'une position, d'une longueur ou d'un angle, selon l'une des revendications 1 à 5 ;
- détecter (1020) toutes les transitions d'un un logique à un zéro logique et toutes les transitions d'un zéro logique à un un logique d'un mot de code ; et
- comparer (1030) les transitions détectées à une valeur de référence du mot de code.

7. Procédé (1000) selon la revendication 6, consistant en outre à :
- déterminer (1040) une valeur de correction basée sur la comparaison.

8. Procédé (1000) selon la revendication 7, consistant en outre à :
- adapter (1050) un élément d'émission (110) et/ou un élément de réception (210) du dispositif (10) sur la base de la valeur de correction.

9. Procédé (1000) selon l'une des revendications 6 à 8, consistant en outre à :
- émettre (1060) une erreur basée sur la comparaison.
